Europäisches Patentamt

European Patent Office

Office européen des brevets

(11) Veröffentlichungsnummer: **0 386 665**
**A2**

## (12) EUROPÄISCHE PATENTANMELDUNG

(21) Anmeldenummer: 90104165.7

(22) Anmeldetag: 03.03.90

(51) Int. Cl.5: **G01N 15/02, G01N 15/06, G01N 15/10, G01R 29/24, G01P 5/08, G01P 5/22**

(30) Priorität: 08.03.89 DE 3907387

(43) Veröffentlichungstag der Anmeldung:
**12.09.90 Patentblatt 90/37**

(84) Benannte Vertragsstaaten:
**AT BE CH DE DK ES FR GB GR IT LI LU NL SE**

(71) Anmelder: **Singer, Hermann, Prof. Dr.-Ing.
Lüttendamm 9
D-2000 Stapelfeld b. Hamburg(DE)**

(72) Erfinder: **Singer, Herman, Professor Dr.-Ing.
Lüttendamm 9
2000 Stapelfeld bei Hamburg(DE)**
Erfinder: **Rossner, Michael, Dipl.-Ing.
Haldesdorfer Str. 158
2000 Hamburg 71(DE)**

(74) Vertreter: **Schmidt-Bogatzky, Jürgen, Dr. Ing.
et al
Schlossmühlendamm 4
D-2100 Hamburg 90(DE)**

(54) **Verfahren zur Messung von Partikeln in polydispersen Systemen und von Partikelkonzentrationen monodisperser Aerosole sowie Messvorrichtung zur Durchführung des Verfahrens.**

(57) Die Erfindung betrifft ein Verfahren zur Messung von Größe und/oder Ladung und/oder Geschwindigkeit und/oder Konzentration von Partikeln in polydispersen Systemen und von Partikelkonzentrationen monodisperser Aerosole sowie eine Meßvorrichtung zur Durchführung des Verfahrens. Die Partikelströmung wird durch mindestens einen aktiven Ringsensor hindurch oder an einem Punktsensor vorbeigeleitet. Die am Sensor influenzierte Ladung eines jeden Partikels wird einem aktiven Ladungsverstärker zugeführt. Das Ausgangssignal des Verstärkers dient als Eingangssignal für ein Meßwertanzeigegerät. Der Verstärker ist Bestandteil einer Meßwertauswerteschaltung, die mindestens aus einem Kondensator, einem ohmschen Widerstand und dem Verstärker besteht und sensornah in die Anordnung des Sensors integriert ist.

EP 0 386 665 A2

## Verfahren zur Messung von Partikeln in polydispersen Systemen und von Partikelkonzentrationen monodisperser Aerosole sowie Meßvorrichtung zur Durchführung des Verfahrens

Die Erfindung betrifft ein Verfahren zur Messung von Größe und/oder Ladung und/oder Geschwindigkeit und/oder Konzentration von Partikeln in polydispersen Systemen und Partikelkonzentrationen monodisperser Aerosole sowie eine Meßvorrichtung zur Durchführung des Verfahrens.

Es ist bekannt, zur Erfassung von Partikelgrößen, Partikelkonzentrationen und Strömungsgeschwindigkeiten optische Meßverfahren zu verwenden, wobei die Meßsignale opto-elektronisch gewandelt und angezeigt werden. Die hierzu erforderlichen Meßvorrichtungen sind verhältnismäßig teuer. Von Nachteil ist ferner, daß das Meßergebnis von den optischen Eigenschaften der Partikel beeinflußt wird und bei Partikelgrößen von $\leq 0{,}1$ $\mu m$ wegen der Raleigh-Streuung eine optische Messung erschwert oder unmöglich wird. Es ist ferner bekannt, zur berührungslosen Messung von Raumladungswolken elektrische Feldsonden einzusetzen. Unter Berücksichtigung der Tatsache, daß sich Aerosol-Partikel elektrisch aufladen, sind auch schon Partikelgrößenmessungen unter Ausnutzung der elektrischen Aufladung so durchgeführt worden, daß entweder die Aufladung eines Sammelbehälters bzw. einer Aufprallscheibe als integraler Effekt oder daß der Ladestrom dieses Sammelbehälters bzw. dieser Aufprallscheibe gemessen wurde. Diese Verfahren sind hinsichtlich ihrer Meßgenauigkeit beschränkt und ermöglichen keine Messung von Partikelkonzentrationen und Strömungsgeschwindigkeiten der Partikel.

Die Aufgabe der Erfindung besteht darin, ein Verfahren der eingangs genannten Art und eine Meßvorrichtung zu dessen Durchführung aufzuzeigen, das es ermöglicht, auch Einzelpartikel im Bereich $\geq 2$ $\mu m$ und Partikelwolken bis herunter in den Bereich von einigen 10 nm sicher erfassen zu können.

Erfindungsgemäß erfolgt die Lösung der Aufgabe bezüglich des Verfahrens durch die kennzeichnenden Merkmale des Anspruchs 1 und bezüglich der Meßvorrichtung durch die kennzeichnenden Merkmale der Ansprüche 17 und 19.

Gegenüber den bekannten Verfahren ist es nach der erfindungsgemäßen Lösung möglich, unabhängig von den optischen Eigenschaften der Partikel Einzelpartikel im Größenbereich von $\geq 2$ $\mu m$ sofort ermitteln und anzeigen zu können. Es ist die Erfassung großer Volumina möglich, wobei auch grobe Aussagen über die Partikelform möglich sind. Zur Messung von Größe, Geschwindigkeit und Konzentration von Partikeln in polydispersen Systemen wird die elektrische Ladung dieser Partikel ausgenutzt. Diese Partikel sind entweder schon elektrisch aufgeladen, z.B. durch Kontakteffekte, Bruchaufladung, Ionisierungsvorgänge bei Verbrennungen oder Kondensationsaufladung oder werden zusätzlich in einer Aufladevorrichtung in einem elektrischen Feld durch Anlagerung ionisierter Luftmoleküle definiert geladen. Die natürliche Aufladung der Partikel ist zwar stark stochastischer Natur, ermöglicht aber dennoch, einen Zusammenhang zwischen Partikelladung und -größe durch statistische Methoden herzustellen. Bei einer definierten Aufladung ist der Ladungs-Größe-Zusammenhang eindeutig gegeben und läßt sich für sphärische Partikel mit den aus der Elektrofilterphysik bekannten Auflademechanismen beschreiben. Es gilt

$$Q_p = 4\pi\varepsilon_o R^2 \cdot E \cdot \left[ 2\,\frac{\varepsilon_p - 1}{\varepsilon_p + 2} + 1 \right] \cdot \frac{t}{t+\tau} \text{ mit } \tau = \frac{4\varepsilon_o}{Neb} \tag{1}$$

für den Fall der Feldaufladung und

$$Q_p = \frac{4\varepsilon_o RkT}{e} \cdot \left[ \ln\!\left(\frac{R\,N\,e^2 \cdot v_i}{4\pi\varepsilon kT} \cdot t + 1 \right) \right] \tag{2}$$

für den Fall der Diffusionsaufladung, wobei
$Q_p$ = Partikelladung
$R$ = äquivalenter Partikelradius
$\varepsilon_0$ = Dielektrizitätskonstante des Trägergases
$\varepsilon_p$ = Dielektrizitätskonstante des Partikels
$N$ = Ionenkonzentration
$e$ = Elementarladung
$b$ = Ionenbeweglichkeit

k = Boltzmann-Konstante
$v_i$ = Ionengeschwindigkeit
t = Zeit
T = absolute Temperatur
bedeuten.

Beide Auflademechanismen können im allgemeinen addiert werden und ergeben die gesamte Ladung des Partikels. Für Partikel mit Durchmessern > 1μm ist die Feldaufladung dominant, für kleine Partikel die Diffusionsaufladung. Die Ladung der Partikel läßt sich berührungslos mit Ḋ-Sensoren messen, deren integriertes Signal proportional der influenzierten Ladung Q* ist, wozu folgende Beziehungen gelten

$$i(t) = \frac{dQ^*}{dt} = \epsilon A \frac{dE}{dt} \qquad (3)$$

$$u(t) = \frac{1}{C} e^{-\frac{t}{RC}} \left[ Q^*(t) e^{-\frac{t}{RC}} - \frac{1}{RC} \int_0^t Q^*(\tau) e^{-\frac{\tau}{RC}} d\tau \right] \qquad (4)$$

$$C \to \infty: u(t) = \frac{Q^*}{C} \qquad ; RC \to 0: \quad u(t) = R \cdot \frac{dQ^*}{dt} \qquad (5)$$

Vorteilhafte Ausgestaltungen der Erfindung werden in den abhängigen Ansprüchen beschrieben.

Die Erfindung wird nachstehend am Beispiel der in den Zeichnungen dargestellten Meßvorrichtung näher erläutert. Es zeigt:

Fig. 1a und 1b jeweils einen aktiven Ḋ-Sensor der Meßvorrichtung in einer schematischen Darstellung,

Fig. 2 eine Sensoreinheit der Meßvorrichtung in einer Seitenansicht im Schnitt,

Fig. 3 eine Aufladevorrichtung der Meßvorrichtung in einer Seitenansicht im Schnitt,

Fig. 4 und 5 jeweils ein Blockschaltbild einer Meßvorrichtung zur Aerosolmessung,

Fig. 6 einen segmentierten Ringsensor der Meßvorrichtung in einer schematischen perspektivischen Ansicht.

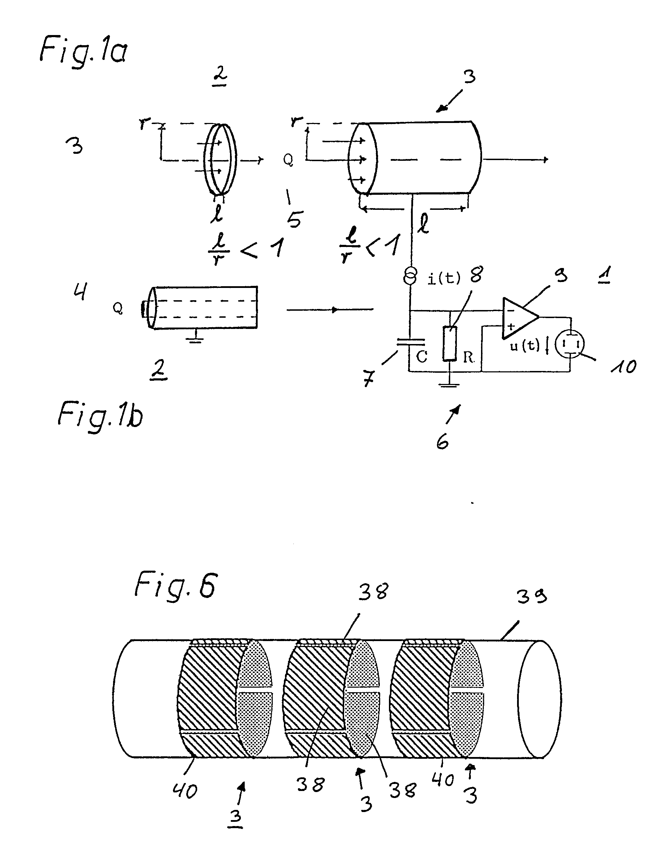

In den Fig. 1a und 1b sind verschiedene Ausführungsformen eines aktiven Ḋ-Sensors 2 schematisch dargestellt, die mit jeweils einer elektrischen Meßwertauswerteschaltung 6 die Meßvorrichtung 1 bilden. In Abhängigkeit von der jeweiligen Problemstellung kommen unterschiedliche aktive Sensoren 2 in Betracht. Für die Detektion einzelner kleiner Partikel, wie sie z. B. in Reinräumen vorliegen, eignen sich Ringsensoren 3, die den zu untersuchenden Luftstrom umschließen und so eine gute Ladungsausnutzung der felderzeugenden Partikel ermöglichen. Punktsensoren 4 werden verwendet, wenn nur in einem bestimmten Bereich des Luftstroms detektiert werden soll. Die Meßwertauswerteschaltung 6 besteht aus einem Kondensator 7 mit bestimmter Kapazität, einem ohmschen Widerstand 8, einem Verstärker 9 und dem Meßwertanzeigegerät 10. Es ist aber auch möglich, in der Meßwertauswerteschaltung 6 mehrere elektrische Bauteile wie Kondensatoren 7 oder ohmsche Widerstände 8 vorzusehen.

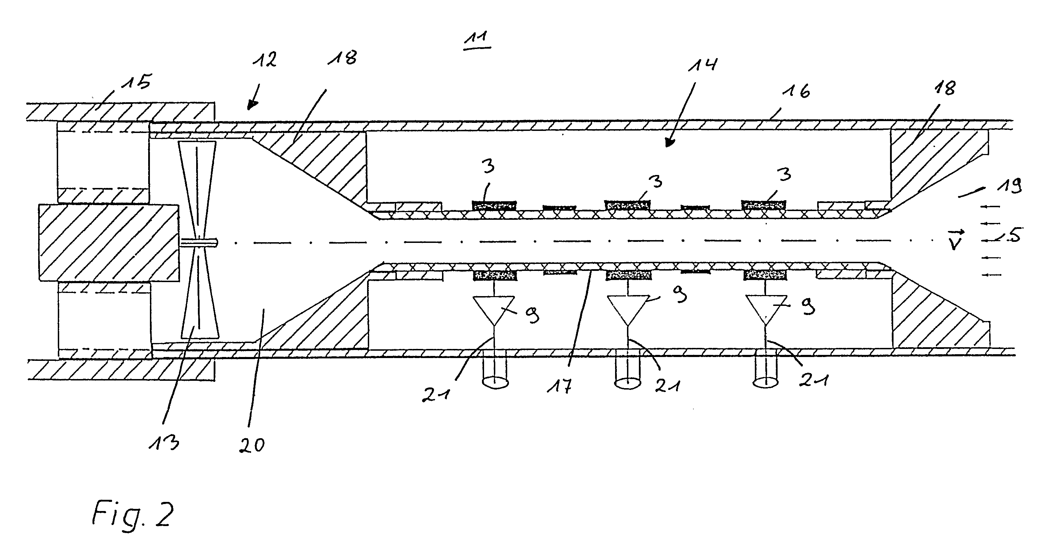

Fig. 2 zeigt eine Sensoreinheit 11, die zur Einzelpartikelmessung dient. Die Sensoreinheit 11 besteht aus einem rohrförmigen Gehäuse 12, in dem ein Axialventilator 13 und die Sensoreinrichtung 14 angeordnet sind. Der Axialventilator 13 befindet sich in einem rohrförmigen Gehäusemantel 15, in dem saugseitig zum Axialventilator 13 ein Mantelrohr 16 zur Aufnahme der Sensoreinrichtung 14 eingesetzt ist. In dem Mantelrohr 16 befindet sich ein Meßrohr 17 aus z. B. Kunststoff. Das Meßrohr 17 ist an beiden Endabschnitten mittels eines Haltestücks 18 mit dem Mantelrohr 16 verbunden. Das Gehäuse 12 ist als Schirmung ausgebildet. Durch die Schirmung wird verhindert, daß die Sensoreinrichtung 14 durch Störsignale beeinflußt wird. Das einströmseitige Haltestück 18 weist einen konischen Einlauf 19 und das ausströmseitige Haltestück 18 einen konischen Auslauf 20 auf. Die Sensoreinrichtung 14 besteht aus drei Ringsensoren 3, die im Abstand voneinander auf dem Meßrohr 17 angeordnet sind. Jede Ringsonde 3 ist mit einem Verstärker 9 verbunden, dessen Ausgang mittels einer durch das Mantelrohr 16 geführten Meßwertleitung 21 mit dem Meßwertanzeigegerät 10 verbunden ist. Zwischen jedem Verstärker 9 und der zugehörigen Ringsonde 3 ist jeweils mindestens ein Kondensator 7 und ein ohmscher Widerstand 8 geschaltet. Zur Verringerung von Polarisationseffekten in der Verstärkerzuleitung sind Verstärker 9, Kondensator 7 und ohmscher Widerstand 8 sensornah in die Anordnung zwischen Meßrohr 17 und Innenwand des Mantelrohrs 16 integriert.

Die Sensoreinheit 11 kann z. B. für die Ladungsmessung einzelner kleiner Partikel verwendet werden, wie sie in Reinräumen vorliegen. Der Axialventilator 13 saugt die zu untersuchende Luft durch das Meßrohr 17 an, auf dem sich die Ringsensoren 3 befinden. Die auf einem Ringsensor 3 influenzierte Partikelladung wird direkt am Ringsensor 3 dem aktiven Verstärker 9 der Schaltung mit Kondensator(en) 7 und ohmschen Widerstand bzw. Widerständen 8 zugeführt, um Störeinflüsse der Meßzuleitung gering zu halten. Eine gute Ladungsausnutzung wird durch optimierte Ringsensoren 3 mit möglichst hohem lokalen Auflösungsvermögen und geringer Beobachtungszeit durch kleine Sensorlänge erzielt. Zur Erzielung eines hohen Signal-Rausch-Abstandes wird das Signal über signalangepaßte Filter weiter verstärkt. Um den Einsatz von angepaßten Filtern zur Rauschunterdrückung zu ermögli chen, ist es von Vorteil, im Rohr annähernd konstante Strömungsgeschwindigkeiten auszubilden, um bei auftretenden Einzelereignissen bekannte und determinierte Sensorsignale zu gewährleisten. Die Signale aller drei Ringsensoren 3 werden entsprechend zeitverzögert addiert. Mit dieser Anordnung von Ringsensoren 3 läßt sich eine Empfindlichkeit erzielen, die einem äquivalenten Ladungsrauschen von $Q_{eff} = 0,034$ fC entspricht. Somit können einzelne Ladungen von 0,13 fC noch mit ausreichender Genauigkeit erkannt werden. Durch Korrelation der Sensorsignale ist eine weitere Verbesserung des Signal-Rauschverhältnisses möglich.

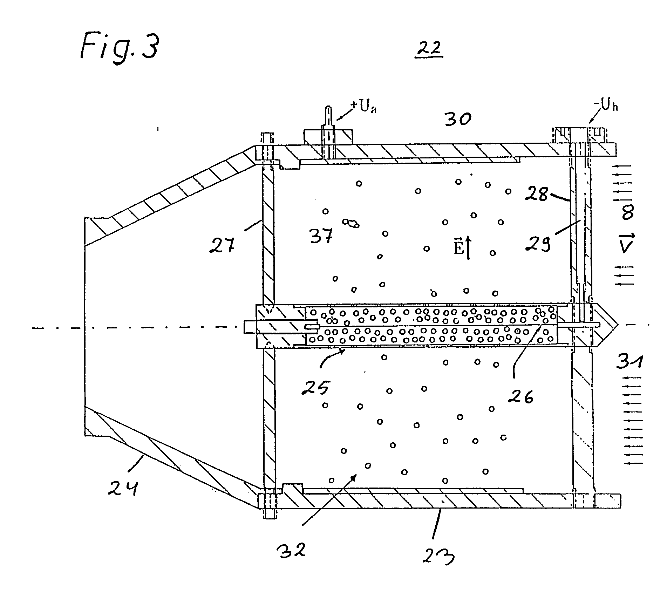

Die im Luftstrom mitgeführten Partikel der Partikelströmung 5 können - sofern erforderlich - vor Eintritt in das Meßrohr 17 auch mittels einer Aufladevorrichtung in ionisierter Luft definiert elektrisch geladen werden. Eine solche Aufladevorrichtung ist in Fig. 3 dargestellt und wird unten näher beschrieben.

Das mittels der Sensoreinheit 11 zu untersuchende Luftvolumen kann bis zu 0,1 m³/sec bei entsprechendem Durchmesser des Meßrohrs 17 betragen, was eine deutliche Verbesserung der Analysezeit bzw. des Analysevolumens gegenüber bekannten optischen Verfahren bedeutet. Eine Anpassung der Sensoreinheit 11 an höhere Verunreinigungskonzentrationen kann durch eine mechanische Verringerung des Meßrohrdurchmessers erfolgen. Aufgrund des geringen Materialpreises und der im Vergleich zu optischen Verfahren geringen Empfindlichkeit eignet sich diese als Partikelzähler ausgebildete Sensoreinheit 11 besonderes für Messungen in Reinräumen geringer Güteklasse, aber auch zur Messung der Staubbelastung in Industrie und Arbeitsräumen. Die berührungslose Messung von Strömungsgeschwindigkeiten in einem Rohr bzw. die Messung des Volumenstroms in diesem mittels Ringsensoren 3 kann auch mit solchen durchgeführt werden, die das Rohr nicht voll umschließen.. Bei Kenntnis des Sensorabstandes läßt sich durch Messung der Zeitverschiebung von Einzelsignalen bzw. durch Korrelation mindestens zweier Sensorsignale auf jeden Fall die mittlere Strömungsgeschwindigkeit bestimmen. Hierbei können zur Signalerzeugung im Luftstrom mitgeführte Ionen, Elektronen oder geladene Staubpartikel verwendet werden, soweit sie der Strömung schlupffrei folgen können.

Die in Fig. 3 dargestellte Aufladevorrichtung 22 besteht aus einem zylinderförmigen Mantel 23, der ausströmseitig mit einem sich in Strömungsrichtung im Querschnitt verjüngenden Ausströmstutzen 24 verbunden ist. An diesen kann eine Sensoreinheit 11 angeschlossen werden. Die Aufladevorrichtung 22 weist eine koaxiale Dreielektrodenanordnung auf, die einen separate Einstellung von Ionenstromdichte und elektrischen Feld in der partikelbehafteten Luftströmung ermöglicht. Hierzu ist in dem Mantel 23 koaxial eine Gitterröhre 25 mit einer mittigen Sprühelektrode 26 angeordnet. Die Gitterröhre 25 ist mittels Abstandhaltern 27, 28 mit dem Mantel 23 verbunden. In dem Abstandhalter 28 ist eine Leitung 29 geführt, mittels derer die Sprühelektrode 26 an eine negative Spannung $-U_h$ angelegt wird. Auf der Innenfläche des Mantels 23 ist eine Anode 30 angeordnet, die mit einer positiven Anodenspannungsquelle $+U_a$ verbunden ist. Aus der Kenntnis von Anodenstrom und Anodenspannung läßt sich sowohl die Raumladungsdichte als auch die elektrische Feldstärke im gesamten Strömungskanal angeben. Die im Luftstrom 31 mitgeführten Partikel 37 werden in der Aufladevorrichtung 22 in ionisierter Luft definiert elektrisch geladen. Die Ionen entstehen dabei durch Koronaentladung in der Nähe der auf negativem Hochspannungspotential liegenden Sprühelektrode 26. Wird eine positive Anodenspannung angelegt, driften die Ionen aus dem Inneren der Gitterröhre 25 in den Strömungskanal 32 zwischen dem Mantel 23 und der Gitterröhre 25 und lagern sich entsprechend Gleichungen (1) und (2) an den im Luftstrom 31 mitgeführten Partikeln 37 an. Aufgrund der koaxialen Geometrie der Anordnung läßt sich im Strömungskanal 32 ein homogenes elektrisches Feld bei bekannten Raumladungsverhältnissen erreichen. Entsprechend Gleichungen (1) und (2) ist so ein bekannter Zusammenhang zwischen sphärischem Partikelradius und der Ladung gegeben. Bei einer Auf ladefeldstärke von 2 kV/cm können somit noch entsprechend der Detektionsgrenze von 0,13 fC Partikel von bis zu ca. 2μm äquivalentem Durchmesser erfaßt werden.

Beschränkt man sich nicht nur auf die Messung einzelner Partikel 37, lassen sich über die Summen- bzw. Raumladung elektrisch geladener Aerosolteilchen auch Aussagen über Korngrößenverteilung und Konzentration in Aerosolen mit Partikeldurchmessern bis herunter zu 10 nm - 25 nm bei Konzentrationen von $10^{14}$ - $10^6$ parts/$m^3$ treffen. Dies wird durch die Ausnutzung zweier Tatsachen erreicht:

- Die Partikelladung, die hier maßgeblich durch die Anlagerung von Kleinionen aufgrund von Diffusionsvorgängen entsteht, ist sowohl hinsichtlich ihrer Gesamtladung als auch in ihrem zeitlichen Aufladeverhalten abhängig vom Partikelradius, wie Gleichung (2) verdeutlicht.

- Die Abscheidung dieser geladenen Aerosolpartikel aus einer Luftströmung aufgrund der Kräfte eines externen elektrischen Feldes hängt ebenfalls vom Partikeldurchmesser ab.

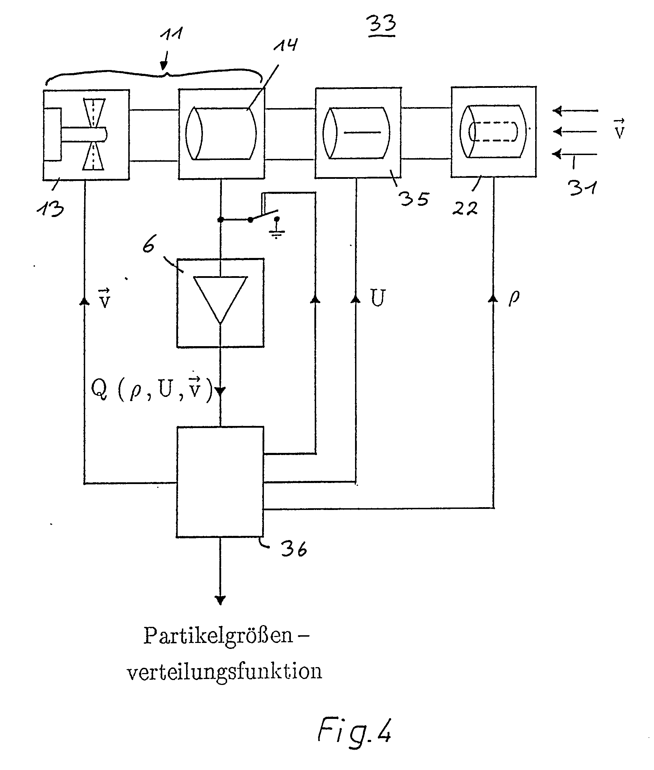

Zur Durchführung der Ermittlung von Korngrößenverteilung und Konzentrationen kann eine Meßanordnung 33 verwendet werden, wie sie in Fig. 4 dargestellt ist. Die Meßanordnung 33 besteht aus einer Sensoreinheit 11, einer Abscheideeinheit 35 und einer Aufladevorrichtung 22, die mit einem Rechner 36 verbunden sind. Der Rechner 36 regelt den Meßvorgang und führt die Meßwertauswertung durch. Die Sensoreinheit 11 besteht aus einem Axialventilator 13 und einer Sensoreinrichtung 14. Die Ringsensoren 3 sind ausgangsseitig wie oben beschrieben jeweils mit einem Verstärker 9 verbunden. Setzt man die Aerosolpartikel, nachdem sie die Aufladevorrichtung 22 passiert haben, einem definierten elektrischen Feld in der Abscheideeinheit 35 aus und mißt unter Variation der Auflade- und Abscheidebedingungen mit der Sensoreinheit 11 die verbleibende Raumladung, können Aussagen über Konzentration und Größe der gemessenen Partikel 37 getroffen werden.

Partikel 37 mit Durchmessern < 10 $\mu$m folgen quasi schlupffrei langsamen Luftströmungen (0< v < 20 $\frac{m}{sec}$ ). Korreliert man die Signale zweier eng benachbarter Ringsensoren 3, die ein durchströmtes Rohr umschließen, läßt sich die mittlere Strömungsgeschwindigkeit in diesem Rohr bestimmen.

Mittels kleinster Ringsensoren 3 mit geringem Strömungswiderstand lassen sich auch Strömungsprofile in - verglichen mit den Sensorabmessungen - großen Strömungskanälen ermitteln wie z.B. in Schornsteinen und Lüftungsschächten. Voraussetzung ist, daß in dem Strömungskanal eine ausgeprägte Hauptströmungsrichtung besteht.

Liegen nicht genügend felderzeugende Partikel 37 in der Strömung vor, kann entweder durch Zugabe von Rauchgas wie z.B. Zigarettenrauch oder durch das Einbringen einer Ionisierungsquelle in ausreichendem Abstand vor dem Ringsensor 3 für ausreichende Ladungsmengen gesorgt werden. Andererseits können mit großen Ringsensoren, die z.B. um einen Schornstein oder einen Lüftungsschacht gelegt sind, oder mit Punktsensoren auch integrale Aussagen über die Partikelzahl oder -konzentration im gesamten erfaßten Strömungsquerschnitt gemacht werden. Die beschriebenen Verfahren mit entsprechenden Meßvorrichtungen können auch dann eingesetzt werden, wenn die Strömung hochkonzentriert und optisch undurchlässig ist, so daß optische Sensoren nicht mehr wirksam sind.

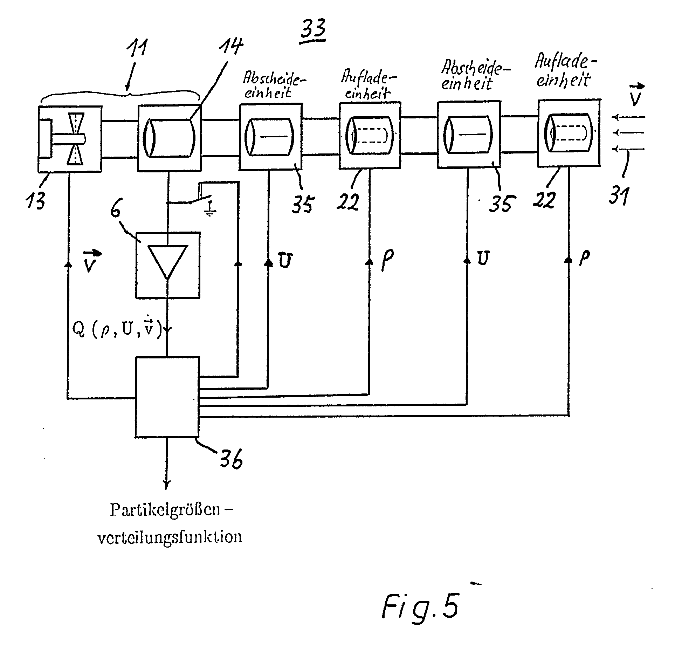

Fig. 5 zeigt eine weitere Ausführung einer Meßanordnung 33. Zur Verbesserung der Klassierung z.B. im Korngrößenbereich von 10 nm bis 500 nm sind zwei Aufladeeinheiten 22 mit unterschiedlichen Ionisierungsstärken und zwei Abscheideeinheiten 35 hintereinandergeschaltet und mit dem Rechner 36 zur Ansteuerung und Überwachung verbunden. Es können auch mehrere Aufladeeinheiten 22 und Abscheideeinheiten 35 hintereinandergeschaltet werden.

Es ist auch möglich, mittels mehrerer als segmentierte Ringsensoren 40 ausgebildete Ringsensoren 3 Ladungspositionen zu bestimmen. Durch die segmentierten Ringsensoren 40 ist der Raumpunkt einer Raumladung i.a. vollständig bestimmbar. Durch Segmentierung eines Ringsensors 3 (Fig. 6) läßt sich die Position einer Ladung bzw. Ladungshäufung in einem Rohr 39 eindeutig bestimmen. Dieses Verfahren kann deshalb auch zur Ortung von Partikelhäufungen in einer Rohrströmung benutzt werden. Ebenso lassen sich mit zwei zusätzlichen benachbarten, segmentierten Ringsensoren 40 in Verbindung mit dem oben erwähnten Korrelationsverfahren auch differentielle Aussagen über das Strömungsprofil einer Rohrströmung treffen. Jedes Ringsensorelement 38 ist hierbei über eine Schaltungsanordnung mit mindestens einem Kondensator 7 und einem ohmschen Widerstand 8 mit einem Verstärker 9 verbunden.

Bei den beschriebenen Meßanordnungen 33 werden die Partikel in ionisierter Luft definiert elektrisch aufgeladen. Hierzu kann an der jeweiligen Anode 30 als Spannung $U_a$ eine hohe Gleichspannung angelegt werden. Es ist aber auch möglich, dieser Gleichspannung eine Wechselspannung zu überlagern oder aber eine Gleichspannung mit überlagerter Pulsspannung zu verwenden.

## Ansprüche

1. Verfahren zur Messung von Größe und/oder Ladung und/oder Geschwindigkeit und/oder Konzentration von Partikeln in polydispersen Systemen, insbesondere Staub-Luft-Gemischen, und von Partikelkonzentrationen monodisperser Aerosole, dadurch gekennzeichnet, daß die Partikelströmung durch mindestens einen aktiven Ringsensor hindurch oder an einem Punktsensor vorbei geleitet wird, daß die am Sensor influenzierte Ladung eines jeden Partikels einem aktiven Ladungsverstärker zugeführt wird und daß dann das Ausgangssignal des Verstärkers als Eingangssignal für ein Meßwertanzeigegerät verwendet wird.

2. Verfahren nach Anspruch 1, dadurch gekennzeichnet, daß zur Messung der Größe und der Ladung einzelner elektrostatisch aufgeladener Partikel in polydispersen Systemen bis herunter zu äquivalenten Partikeldurchmessern von $1\mu$ m die Ladung der Partikel durch Influenz auf elektrische Feldsonden wie aktive Ḋ-Sensoren abfließt und gemessen wird.

3. Verfahren nach Anspruch 1, dadurch gekennzeichnet, daß zur Messung der Partikelkonzentration in monodispersen Aerosolen im Korngrößenbereich von 10 nm bis 500 nm bei Konzentrationen von $10^{14}$ bis $10^6$ parts/m³ die Raumladung der durch Kleinionenanlagerung elektrisch aufgeladenen Aerosolpartikel durch Influenz auf aktive Ḋ-Sensoren abfließt und gemessen wird.

4. Verfahren nach Anspruch 1, dadurch gekennzeichnet, daß zur Messung der Partikelkonzentration in polydispersen Systemen im Korngrößenbereich von 10 nm bis 500 nm bei Konzentrationen von $10^{14}$ bis $10^6$ parts/m³ unter Berücksichtigung der partikelgrößenabhängigen Aufladezeit durch Ionenanlagerung durch Diffusion und der größenabhängigen Partikelabscheidung geladener Teilchen im poly dispersen System durch Einwirkung elektrischer Feldkräfte bei Variation der Abscheidungs- und Aufladebedingungen gleichzeitig die verbleibende Raumladung durch aktive D-Sensoren gemessen und die Partikelgrößenverteilung und Konzentration des Aerosols ermittelt wird.

5. Verfahren nach Anspruch 1 bis 4, dadurch gekennzeichnet, daß die Partikelströmung durch ein Rohr aus elektrisch hochisolierendem Werkstoff geleitet wird und die elektrostatischen Ladungen der Partikel auf den mindestens einen das Rohr umgebenden Ringsensor influenziert werden.

6. Verfahren nach Anspruch 5, dadurch gekennzeichnet, daß die Partikel der Partikelströmung vor Eintritt in das Rohr in ionisierter Luft definiert elektrisch aufgeladen werden.

7. Verfahren nach Anspruch 6, dadurch gekennzeichnet, daß die Partikel durch angelegte hohe Gleichspannung,durch Überlagerung von Gleich- und Wechselspannung oder durch Überlagerung von Gleich- und gepulster Spannung elektrisch aufgeladen werden.

8. Verfahren nach Anspruch 2, 5 bis 7 zur Detektion einzelner Partikel, dadurch gekennzeichnet, daß die Partikelströmung mit über den Querschnitt des Rohres annähernd konstanter Strömungsgeschwindigkeit durch dieses geleitet wird, wobei die Ladungen der Partikel auf mindestens einen oder mehrere in Strömungsrichtung hintereinander angeordnete gegen äußere elektrische Felder abgeschirmte Ringsensoren übertragen werden, wobei die Signale mehrerer Ringsensoren zur Erzielung eines hohen Signal-Rausch-Abstandes gegebenenfalls korreliert werden.

9. Verfahren nach Anspruch 8, dadurch gekennzeichnet, daß die Signale der Ringsensoren jeweils mittels eines in die Anordnung integrierten Verstärkers verstärkt werden.

10. Verfahren nach Anspruch 1 bis 3 zur Messung der Strömungsgeschwindigkeit bzw. des Volumenstroms einer Partikelströmung in einem Rohr, dadurch gekennzeichnet, daß zur Signalerzeugung in der Luftströmung schlupffrei mitgeführte Ionen, Elektronen oder geladene Staubpartikel verwendet werden, daß die Signale zweier im Abstand angeordneter Ringsensoren gemessen und daß dann aus der Zeitverschiebung der Einzelsignale bzw. durch Korrelation mindestens zweier Sensorsignale die mittlere Strömungsgeschwindigkeit bestimmt wird.

11. Verfahren nach Anspruch 1 bis 10 zur Messung von Strömungsverteilungen oder zur Ortsbestimmung von Partikel-bzw. Ladungsanhäufungen in einem Rohr, dadurch gekennzeichnet, daß die Ladungen der Partikel auf Ringsensorsegmente der Ringsensoren influenziert werden.

12. Verfahren nach Anspruch 1 bis 10 zur Bestimmung lokaler Strömungsgeschwindigkeiten, dadurch gekennzeichnet, daß in dem Bereich ausgeprägter Hauptströmungsrichtung aktive Punkt- oder Ringsensoren eingebracht werden, deren Signale aufgrund influenzierter Ladungen zur Ermittlung der Strömungsgeschwindigkeit korreliert werden.

13. Verfahren nach einem der Ansprüche 1 bis 12, dadurch gekennzeichnet, daß die Partikelströmung durch mehrere Aufladevorrichtungen zur Ionisierung und mehrere Abscheidevorrichtungen geleitet wird.

14. Meßvorrichtung zur Durchführung des Verfahrens nach Anspruch 1 bis 13, gekennzeichnet durch mindestens einen Ringsensor (3) oder Punktsensor (4), der mit einer Meßwertausterteschaltung (6) verbunden ist, die mindestens aus einem Kondensätor (7), einem ohmschen Widerstand (8), einem Verstärker (9) und einem Meßwertanzeigegerät (10) besteht.

15. Meßvorrichtung nach Anspruch 14, dadurch gekennzeichnet, daß der mindestens eine Kondensator (7), ohmsche Widerstand (8) und Verstärker (9) zur Verringerung von Polarisationseffekten in der Verstärkerzuleitung sensornah in die Anordnung des Ringsensors (3) oder Punktsensors (4) integriert ist.

16. Meßvorrichtung zur Durchführung des Verfahrens nach Anspruch 1 bis 13, gekennzeichnet durch eine Sensoreinheit (11), in deren rohrförmigem Gehäuse (12) eine Sensoreinrichtung (14) und ein Axialven-

EP 0 386 665 A2

tilator (13) angeordnet ist.

17. Meßvorrichtung nach Anspruch 14 bis 16, dadurch gekennzeichnet, daß die Sensoreinrichtung (14) aus einem Meßrohr (l₇) aus hochisolierendem Werkstoff besteht, das von im Abstand voneinander befindlichen Ringsensoren (3) umgeben ist, deren Meßwertausgänge mit jeweils einem Verstärker (9) verbunden sind, und das mittels Haltestücken (18) am Gehäuse (12) befestigt ist.

18. Meßvorrichtung nach Anspruch 15 und 17, dadurch gekennzeichnet, daß der dem Ringsensor (3) zugeordnete mindestens eine Kondensator (7) und gegebenenfalls ohmsche Widerstand (8) und Verstärker (9) sensornah zwischen Meßrohr (17) und Innenwand des Gehäuses (12) angeordnet sind.

19. Meßrohr nach Anspruch 17, dadurch gekennzeichnet, daß das Gehäuse (12) als Schirmung gegen äußere elektrische Felder ausgebildet ist.

20. Meßvorrichtung nach Anspruch 16 bis 19, dadurch gekennzeichnet, daß am Einlauf (19) der Sensoreinheit (11) mindestens eine Aufladevorrichtung (22) angeordnet ist.

21. Meßvorrichtung nach Anspruch 20, dadurch gekennzeichnet, daß in Flußrichtung der Partikelströmung zur Verbesserung der Klassierung mehrere Aufladeeinheiten (22) mit unterschiedlichen Ionisierungsstärken angeordnet sind.

22. Meßvorrichtung nach Anspruch 20 und 21, dadurch gekennzeichnet, daß zur separaten Einstellung von Ionenstromdichte und elektrischem Feld in der partikelbehafteten Luftströmung in dem Gehäuse der mindestens einen durchströmten Aufladevorrichtung (22) eine koaxiale Dreielektrodenanordnung ausgebildet ist.

23. Meßvorrichtung nach Anspruch 20 bis 22, dadurch gekennzeichnet, daß die mindestens eine Aufladevorrichtung (22) aus einem zylinderförmigen Mantel (23) besteht,in dem koaxial zur Mittelachse mittels Abstandshaltern (27, 28) eine Gitterröhre (25) mit einer Sprühelektrode (26) gelagert ist und auf dessen Innenwand eine umlaufende Anode (30) angeordnet ist,an der als Spannung $U_a$ eine Gleichspannung, Gleichspannung mit überlagerter Wechselspannung oder Gleichspannung mit überlagerter gepulster Spannung anliegt.

24. Meßvorrichtung nach Anspruch 16 bis 23, dadurch gekennzeichnet, daß zwischen einer Sensoreinheit (11) und der mindestens einen Aufladevorrichtung (22) mindestens eine Abscheideeinheit (35) angeordnet und derart ausgebildet ist, daß die Auflade- und Abscheidebedingungen variierbar sind.

25. Meßvorrichtung nach Anspruch 24, dadurch gekennzeichnet, daß in Flußrichtung der Partikelströmung mehrere Abscheideeinheiten (35) hintereinander geschaltet sind.

26. Meßvorrichtung nach Anspruch 23 bis 25, dadurch gekennzeichnet, daß die Sensoreinheit (11), die mindestens eine Abscheideeinheit (35) und die mindestens eine Aufladevorrichtung (22) mit einem Rechner (36) derart verbunden sind, daß zur Ermittlung der Partikelgrößenverteilungsfunktion in Abhängigkeit von den Signalen der Verstärker (9) der Sensoreinheit (11) durch den Rechner (36) der Axialventilator (13), die mindestens eine Abscheideeinheit (35) und die Dreielektrodenanordung der mindestens einen Aufladevorrichtung (22) ansteuerbar ist.

27. Meßvorrichtung nach Anspruch 14 bis 18, dadurch gekennzeichnet, daß jeder Ringsensor (3) als segmentierter Ringsensor (40) ausgebildet ist und aus mindestens drei Ringsensorsegmenten (38) besteht, die jeweils mit einem Verstärker (9) verbunden sind.

28. Meßvorrichtung nach Anspruch 27, dadurch gekennzeichnet, daß zwischen jedem Ringsensorsegment (38) und Verstärker (9) mindestens ein Kondensator (7) und ein ohmscher Widerstand (8) angeordnet ist.

7

Fig.1a

Fig.1b

Fig.6

Fig. 2

EP 0 386 665 A2

Fig. 3

Partikelgrößen –
verteilungsfunktion

Fig.4

EP 0 386 665 A2

_33_

_11_ _14_ Abscheide-einheit Auflade-einheit Abscheide-einheit Auflade-einheit

13 6

$Q\,(\rho,\mathrm{U},\vec{v})$

35 22 35 22 31

$\vec{v}$ U $\rho$ U $\rho$

36

Partikelgrößen –
verteilungsfunktion

_Fig.5_